# EUROPEAN PATENT APPLICATION

(11) **EP 2 131 556 A1**
(43) Date of publication of application: **09.12.2009**
(21) Application number: 08305238.1
(22) Date of filing: 06.06.2008
(51) Int. Cl.: H04L 29/12

(54) **Time-optimized seek process in a translation table**

(71) Applicant: Deutsche Thomson OHG, 30625 Hannover (DE)
(72) Inventor: Dorau, Kai, 30559, HANNOVER (DE); Brune, Thomas, 30449, HANNOVER (DE)
(74) Representative: Ruellan-Lemonnier, Brigitte

(57) **Abstract**

The present invention relates to the field of an address seek process in an Address Resolution Protocol Translation Table and more specifically to a time-optimisation of such a seek process.

The present invention concerns a method for seeking a first address of a first layer into a Translation Table from a second address of a second layer. Translation Table comprises a plurality of address pairs, each address pair comprising a first address of first layer and a second address of second layer. A current transaction field comprises a current address pair which comprises a first current address and a second current address.

To this end, the method comprises the steps of:
- initiating a first comparison between the second address and the second current address;
- When the first comparison states that the second address and the second current address are different, updating the current transaction field with an address pair of the Translation Table which comprises the second address;
- delivering the current transaction field to first layer.

## Description

### Field Of The Invention

The invention relates to the field of an address seek process in an Address Resolution Protocol Translation Table and more specifically to a time-optimisation of such a seek process.

### Background Of The Invention

In the State of the Art of computer networking, Address Resolution Protocol (ARP) is a standard method for finding a host's hardware address when only its network layer address is known. ARP is not an IP-only or Ethernet-only protocol; it can be used also to resolve many different network-layer protocol addresses to hardware addresses, although, due to the overwhelming prevalence of IPv4 and Ethernet, ARP is primarily used to translate IP addresses to Ethernet MAC addresses. It is also used for IP over other LAN technologies, such as Token Ring, FDDI, or IEEE 802.11, and for IP over ATM.

ARP is widely used, for example when two hosts are on the same network and one of the hosts desires to send a packet to the other host. This situation can be encountered when the two hosts are on the same physical network, that is, both hosts can directly communicate without going through a router. But ARP is also used by two hosts connected over internet and are separated by more than three hops (for example two computers communicating over internet).

In the first cited situation, where two hosts (host A and host B) are connected on a same LAN segment. If host A wants to send an IPv4 packet to host B, host A must know an IPv4 (network layer) address for host B. However, in order to be able to send the packet on the LAN to host B, host A must also have a data link layer address for host B, i.e. a MAC address. If it doesn't already know that MAC address, it would send an ARP request to ask for that MAC address, in hope of getting a reply from host B, or another host over the network, returning the required MAC address.

In this context major issue of ARP process is to supply as quickly as possible after a request a correspondence between a destination protocol address given by a protocol layer and a destination Ethernet address of Ethernet layer.

A disadvantage of State of the art methods is that they are not specially optimized in a way to reduce the seek duration.

One of the goals of the present invention is to propose a time-optimized method for seeking an address in a Translation table.

### Summary Of The Invention

The technical problem that present invention intends to solve is to seek quickly an first address in a Translation Table from a second address.

Thus, the present invention concerns a method for seeking a first address **DEA** of a first layer into a Translation Table from a second address **DPA** of a second layer. Said Translation Table comprises a plurality of address pairs, each address pair comprising a first address of said first layer and a second address of said second layer. A current transaction field comprises a current address pair, said current address pair comprising a first current address **CEA** of said first layer and a second current address **CPA** of said second layer.

To this end, the method comprises the steps of :
- initiating a first comparison between the second address **DPA** and the second current address **CPA;**
- When the first comparison states that the second address **DPA** and the first current address **CPA** are different, updating the current transaction field with a new address pair of the Translation Table which comprises the second address;
- delivering the current transaction field to said first layer.

According to an embodiment, all address pairs having been comprised in the current transaction field being successively recorded in a current transaction array.

According to the invention, the step of updating the current transaction field comprises steps of:
- Initiating second comparisons between the second destination address (**DPA**) and second addresses of address pairs recorded in the current transaction array;
- When one of second comparisons states the second address (**DPA**) is identical to a second address of a new address pair recorded in the current transaction array, updating the current transaction field with a new address pair [DPA, NEW_DEA1] recorded in the current transaction array which comprises the second address (**DPA**);
- When there is no second comparison that states the second address **DPA** is identical to a second address of any address pair recorded in the current transaction array, updating the current transaction field with a new address pair [DPA, NEW_DEA2] comprised in the Translation Table which comprises the second address (**DPA**), and adding said new address pair [DPA, NEW_DEA2] in the current transaction array.

According to an embodiment, the record of new address pair [DPA, NEW_DEA2] in the current transaction array (11) follows LRU algorithm.

According to an embodiment, the first layer is a data-link layer and the second layer is a network layer.

According to an embodiment, the first layer is an Ethernet layer and the second layer is a protocol Layer.

### Brief Description Of The Drawings

The invention will be better understood and illustrated by means of the following embodiments and execution examples, in no way limitative, with reference to the appended figures on which:
Figure 1a, represents an overview of the relationship between destination Protocol addresses, destination Ethernet addresses, Seek Process, ARP Translation Table and Current Translation field;
Figure 1b, represents a Current Translation Field;
Figure 2, represents a flow chart of a seek process according to a first embodiment of the invention;
Figure 3, represents a flow chart of a seek process according to a second embodiment of the invention;
Figure 4, represents a flow chart of a seek process according to a second embodiment of the invention.

### Detailed Description Of Preferred Embodiments

An ARP mediation usually refers to the process of resolving Layer 2 addresses when different resolution protocols are used on either circuit, e.g. ATM on one end and Ethernet on the other. But mechanisms necessary for obtaining Layer 3 addresses (e.g. IP addresses) of stations from Layer 2 addresses (e.g. the DLCI in Frame Relay networks) which is a process, known as "Inverse Address Resolution Protocol" or "InARP" or "Inverse ARP" are very closed to those used to operate ARP. InARP is primarily used in Frame Relay and ATM networks, where Layer 2 addresses of virtual circuits are sometimes obtained from Layer 2 signalling, and the corresponding Layer 3 addresses must be available before these virtual circuits can be used.

The exemplary embodiments comes within the framework of ARP which is intended to ensure a correspondence between destination addresses of a Protocol Layer and corresponding destination addresses of an Ethernet Layer. But the invention is not limited to this particular environment and may be applied within other frameworks where a table comprising a large amount of address pairs is involved.

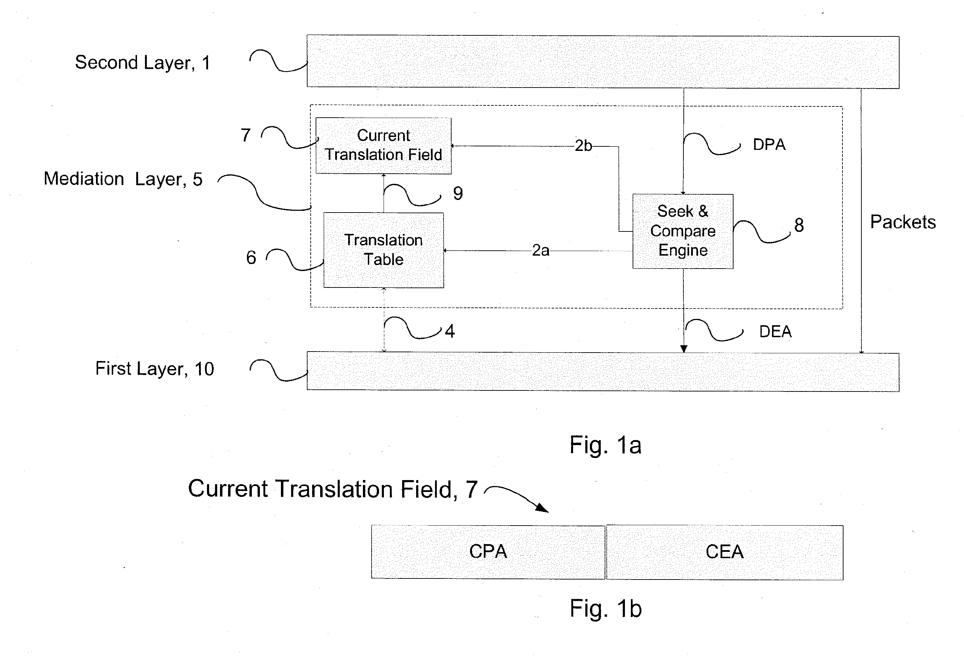

Figure 1a represents a first layer 10, a second layer 1 and a mediation layer 5. The mediation layer is intended to ensure a correspondence between a first address of the first layer and a second address of the second layer. These correspondences are stored in a Translation Table 6 maintained by the mediation layer.

For example, first layer is a data-link layer; second layer is a network layer. More precisely, the first layer is an Ethernet layer, second layer is a protocol layer and mediation layer is an Address Resolution Protocol (ARP) layer; then, first address is a destination Ethernet address **DEA** and second address is a protocol address **DPA.**

The protocol layer addresses a receiving device (latter called "target") by a destination protocol address **DPA.** A packet that shall be delivered from the protocol layer to the Ethernet layer triggers an implementation of a destination Ethernet address **DEA** by the Ethernet layer itself or the protocol layer depending on layers implementation.

The implementation of the destination Ethernet address **DEA** corresponds with a seek of an address pair comprising destination protocol address DPA among address pairs comprised in the translation table. The seek process is realized by a seek engine 8.

A typical mechanism to get the destination Ethernet address **DEA** from the destination protocol address **DPA** is specified in RFC 826 and is not part of this invention. But minimizing the seek duration of addresses within the Translation Table remains a main issue of ARP.

As shown in Figure 1a, addressing mechanisms are typically performed on network layer level due to the fact that packets are able to reach targets in different sub-networks. Nevertheless the Ethernet layer needs to know a destination Ethernet address **DEA** of the target to transmit embedded protocol packets properly into Ethernet frames.

Correspondence between destination protocol addresses **DPA** and destination Ethernet addresses **DEA** are stored in the Translation Table under a form of an address pairs. Each address pair comprises a first address of Ethernet layer and a second address of protocol layer. Maintenance of the Translation Table (updates and adding of address pairs) is specified in RFC 826 and represented as Add & Update Process 4.

Figure 1a also shows, included in mediation layer, a current translation field 7 which comprises a first current Ethernet address **CEA** of first layer (e.g. Ethernet layer) and a corresponding second current protocol address **CPA** of second layer (here IP layer). First and second current addresses **CEA, CPA** are currently used to address packets and can be updated from Translation Table by an update process 9.

Figure 1b is a representation of the current translation field. The current translation field should be initialized by zero.

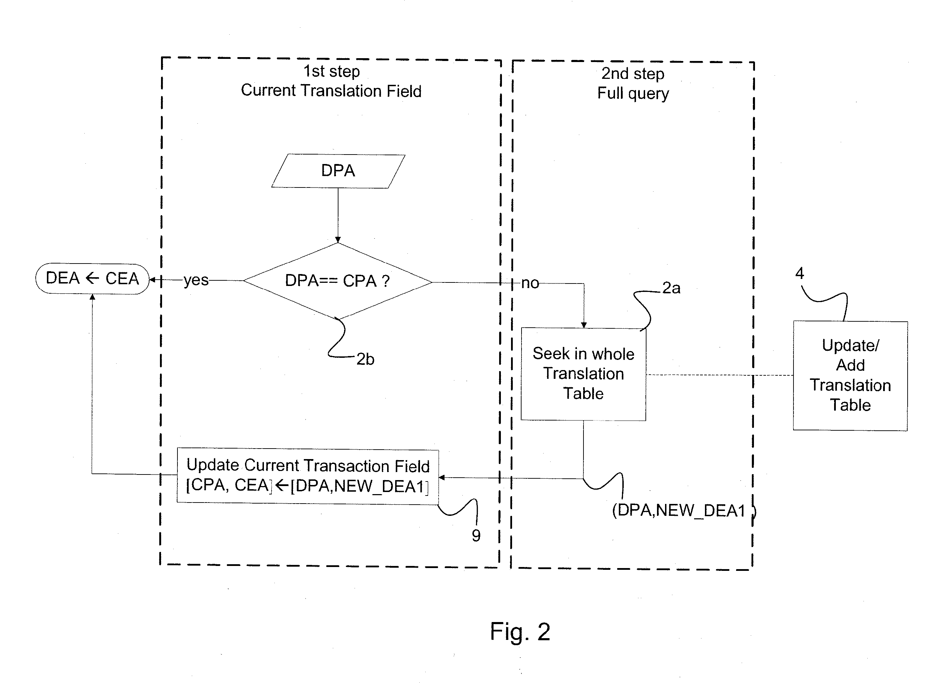

Figure 2 represents a Flow Chart of the seek process according to a first embodiment. The Seek Process initiates a first comparison 2b of the destination protocol address **DPA** with the current protocol address CPA:
- If the first comparison 2b states that the destination protocol address **DPA** is identical to the current protocol address CPA, the current Ethernet address **CPA** is delivered to the Ethernet layer. The seek process is then finished;
- If the first comparison 2b states that the destination protocol address **DPA** and the current protocol address **CPA** are different, a seek process 2a is realized in the whole Translation table 6. The seek process 2a results with a new address pair (NEW_DEA1, DPA) which comprises a new first destination Ethernet Address **NEW_DEA1** and the destination protocol address **DPA.** The current transaction field 7 is then updated with the new address pair (NEW_DEA1, DPA) in a process step 9 and the updated current Ethernet address **NEW_DEA1** is finally delivered to the Ethernet layer.

A first advantage of this embodiment of the invention resides in a significant reduction of seek duration for continuous protocol packet streams having an unchanged protocol address. Indeed, for continuous protocol packet streams the seek process 2a which can be quite long is bypassed.

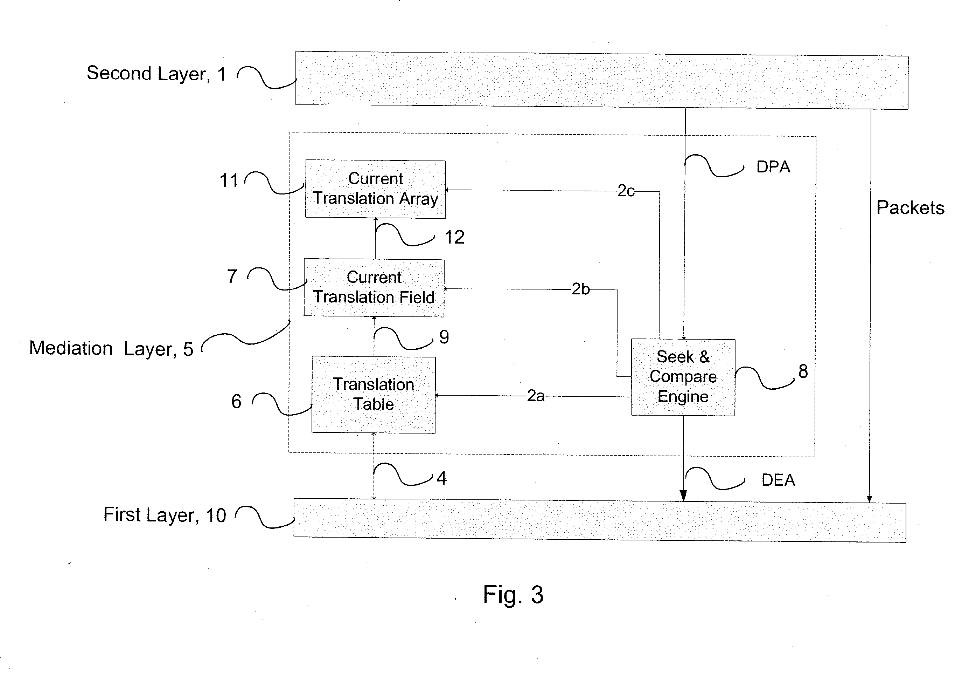

A second embodiment of the invention brings a second advantage of reducing seek duration for quasi-continuous protocol packets streams. This second embodiment which is represented on figure 3 is very similar to the first embodiment: it differs mainly by comprising a current translation array 11 in which a number 'n' of address pairs successively recorded in the current translation field 7 are also recorded (recording step 12), 'n' being greater or equal to two.

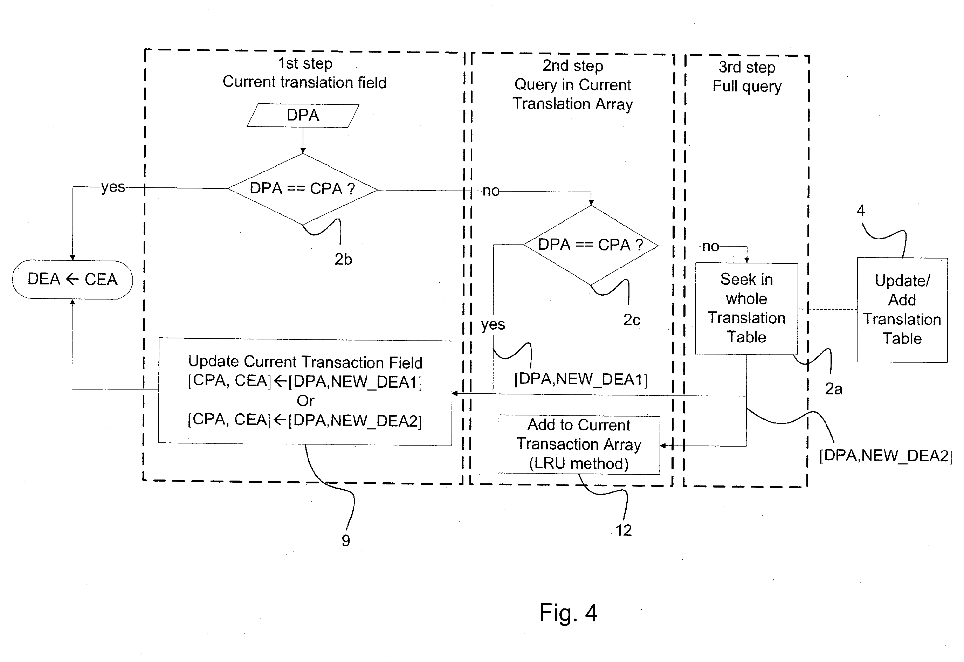

Figure 4 represents a flow chart of a seek process according to a second embodiment of the invention. The flow chart of the second embodiment differs from the flow chart of the first embodiment in that it comprises three main steps. The first and third steps of the second embodiment are similar to the first and second steps of the first embodiment. The second step of the second embodiment is specific: it deals with second comparisons 2c of the incoming destination protocol address **DPA** with second addresses of address pairs recorded in the current translation array 11.

If one of second comparisons states the destination protocol address DPA matches with the second address of one address pair recorded in the current transaction array 11, one updates the current transaction field 7 with the address pair (NEW_DEA1, DPA) recorded in the current transaction array 11 which comprises the destination protocol address DPA and one increases in priority this recorded address pair (NEW_DEA1, DPA) according to LRU algorithm, as explained later.

Advantageously, the new address pair [DPA, NEW_DEA1] recorded in the current transaction array is increased in priority according to LRU algorithm.

If there is no second comparison that states the destination protocol address **DPA** is identical to the second address of any address pair recorded in the current transaction array 11, one updates the current transaction field 7 with a new address pair (NEW_DEA2, DPA) which is comprised in the Translation Table. In particular, the second address of the new address pair is the destination protocol address **(DPA).**

Then, one records the new address pair (NEW_DEA2, DPA) into the current transaction array 11 following LRU algorithm, well known in Computer Science also as 'Least Recently Used Algorithm', 'replacement algorithm' or 'replacement policy'. This algorithm is commonly used for dealing with cache managing and not in address mediation technical field.

Advantageously, the new address pair [DPA, NEW_DEA2] recorded in the current transaction array is increased in priority according to LRU algorithm.

Briefly, LRU algorithm transposition consists in discarding the least recently used address pair stored in the current translation array and replacing it by the new address pair (NEW_DEA2, DPA). The LRU algorithm requires keeping track of which address pair was used and when it was used. General implementations of this technique require to keep "age bits" for pair addresses and to track the "Least Recently Used" pair addresses based on age-bits. In such implementation, every time a new pair address is used, age of all pair addresses recorded in the current translation array changes. For example this age bit can be taken into account to determine an order of examination of addresses recorded in the current translation array or even in the whole translation table.

The second embodiment allows levelizing perfectly between processing effort and performance needs by choosing the right depth of the 'current translation array': one can chose to record the last ten Current Translation fields, the two latest Current Translation fields or the fifty latest Current Translation fields.

The choice of a replacement order known as LRU algorithm leads here to optimized query tables. LRU is a preferred algorithm because of the temporal locality of seeks for the same destination protocol address DPA at quasi continuous protocol packet transfers between the same devices. It is also a way to keep constant the number of address pairs in the Current Translation Array.

An third advantage brought by the second embodiment of the invention is that the implementation and processing effort for a LRU mechanism is relatively small compared to a full table query mechanism. Indeed, the need for a time and performance consuming query in the whole translation table decreases significantly overall.

An additional advantage is presented by the ability of processing the three steps of the second embodiment in parallel.

## Claims

1. Method for seeking a first address **(DEA)** of a first layer (10) into a Translation Table from a second address **(DPA)** of a second layer (1), said Translation Table comprising a plurality of address pairs, each address pair comprising a first address of said first layer (10) and a second address of said second layer (1), a current transaction field (7) comprising a current address pair, said current address pair comprising a first current address **(CPA)** of said first layer (10) and a second current address **(CEA)** of said second layer (1), **characterized in that** it comprises the steps of:
- initiating a first comparison between the second address **(DPA)** and the second current address **(CPA);**
- When the first comparison states that the second address **(DPA)** and the first current address **(CPA)** are different, updating the current transaction field (7) with a new address pair [DPA, NEW_DEA1] of the Translation Table (6) which comprises the second address **(DPA);**
- delivering the current transaction field (7) to said first layer (10).

2. Method for seeking a first address **(DEA)** according to claim 1, all address pairs having been comprised in the current transaction field being successively recorded in a current transaction array (11), **wherein** the step of updating the current transaction field (7) comprises further steps of:
- Initiating second comparisons between the second address **(DPA)** and second addresses of address pairs recorded in the current transaction array (11);
- When one of second comparisons states the second address **(DPA)** is identical to a second address of an address pair recorded in the current transaction array (11), updating the current transaction field (7) with a new address pair [DPA, NEW_DEA1] recorded in the current transaction array (11) which comprises the second address **(DPA);**
- When there is no second comparison that states the second address **(DPA)** is identical to a second address of any address pair recorded in the current transaction array (11), updating the current transaction field (7) with a new address pair [DPA, NEW_DEA2] comprised in the Translation Table (6) which comprises the second address **(DPA),** and recording said new address pair [DPA, NEW_DEA2] in the current transaction array (11).

3. Method for seeking a first address **(DEA)** according to claim 2, **wherein** the record of said new address pair [DPA, NEW_DEA2] in the current transaction array (11) follows LRU algorithm.

4. Method for seeking a first address (DEA) according to claim 3, **wherein** the new address pair ([DPA, NEW_DEA1] , [DPA, NEW_DEA2]) recorded in the current transaction array (11) is increased in priority according to LRU algorithm.

5. Method for seeking a first address **(DEA)** according to one of the claims 1 to 4, **wherein** the first layer (10) is a data-link layer and the second layer (1) is a network layer.

6. Method for seeking a first address **(DEA)** according to one of the claims 1 to 4, **wherein** the first layer (10) is a network layer and the second layer (1) is a data-link layer.

7. Method for seeking a first address **(DEA)** according to claim 5, **wherein** the first layer (10) is an Ethernet Layer and the second layer (1) is a Protocol layer.

8. Method for seeking a first address **(DEA)** according to claim 6, **wherein** the first layer (10) is an Ethernet Layer and the second layer (1) is a Protocol layer.
